# EUROPÄISCHE PATENTSCHRIFT

(11) **EP 1 702 542 B1**
(45) Veröffentlichungstag und Bekanntmachung des Hinweises auf die Patenterteilung: **19.03.2008**
(21) Anmeldenummer: 05027834.0
(22) Anmeldetag: 20.12.2005
(51) Int. Cl.: A47J 27/04, A47J 39/00, A47J 31/60, F24C 15/32

(54) **Haushaltgerät mit Pumpe zum Fördern von Wasser zwischen einem Reservoir und einem Verdampfer**
Household appliance with a pump supplying water between a reservoir and a steam generator
Appareil ménager avec une pompe pour le transport de l'eau entre un réservoir et un générateur de vapeur

(43) Veröffentlichungstag der Anmeldung: 20.09.2006
(73) Patentinhaber: V-Zug AG, 6301 Zug (CH)
(72) Erfinder: Amstutz, Thomas, 5643 Sins AG (CH); Dubach, Urs, 6287 Aesch LU (CH)
(74) Vertreter: Blum, Rudolf Emil

(56) Entgegenhaltungen:
- EP-A- 0 277 337
- US-A- 4 991 545
- US-B1- 6 455 085

## Beschreibung

Die Erfindung betrifft ein Haushaltgerät, insbesondere ein Dampfgargerät, gemäss Oberbegriff von Anspruch 1.

Verschiedene Arten von Haushaltgeräten, insbesondere aber Dampfgargeräte, besitzen ein Wasserreservoir und einen Verdampfer, wobei zum Fördern von Wasser in mindestens einer Richtung zwischen Reservoir und Verdampfer eine Förderpumpe vorgesehen ist. Ein solches Gerät ist aus US-A-4 991 545 bekannt.

Bei derartigen Geräten kann das Problem auftreten, dass im Verdampfer entstehende Kalkpartikel die Förderpumpe und insbesondere auch allfällige Ventile zwischen dem Verdampfer und dem Reservoir verschmutzen und in ihrer Funktion beeinträchtigen können.

Aufgabe der vorliegenden Erfindung ist es deshalb, ein Gerät bereitzustellen, welches durch Kalkpartikel bedingte Probleme reduziert. Diese Aufgabe wird vom Haushaltgerät gemäss Anspruch 1 gelöst.

Anspruchsgemäss ist also an der Austrittsöffnung (d.h. der Druckseite) der Förderkammer der Förderpumpe mindestens ein Filter angeordnet. Diese Anordnung hat den Vorteil, dass sich das Filter an einem Ort befindet, wo das Wasser durch das in der Förderkammer angetriebene Fördermittel (z.B. ein Flügelrad) stark bewegt wird, was zu einer intensiven Bewegung der Kalkpartikel führt. Dadurch wird einerseits einem Verstopfen des Filters entgegengewirkt, und andererseits werden die Partikel durch die Bewegung des Wassers zerkleinert, so dass sie den Betrieb von Ventilen und dergleichen weniger beeinträchtigen.

Weitere bevorzugte Ausführungen der Erfindung ergeben sich aus den abhängigen Ansprüchen sowie aus der nun folgenden Beschreibung eines bevorzugten Ausführungsbeispiels anhand der Figuren. Dabei zeigen:
Fig. 1 ein Blockdiagramm eines Haushaltgeräts mit Wasserreservoir und Verdampfer,
Fig. 2 ein Haushaltgerät von hinten mit abgenommenen Rück- und Seitenwänden,
Fig. 3 eine geöffnete Förderpumpe und
Fig. 4 einen Filtereinsatz zur Montage in der Förderpumpe.

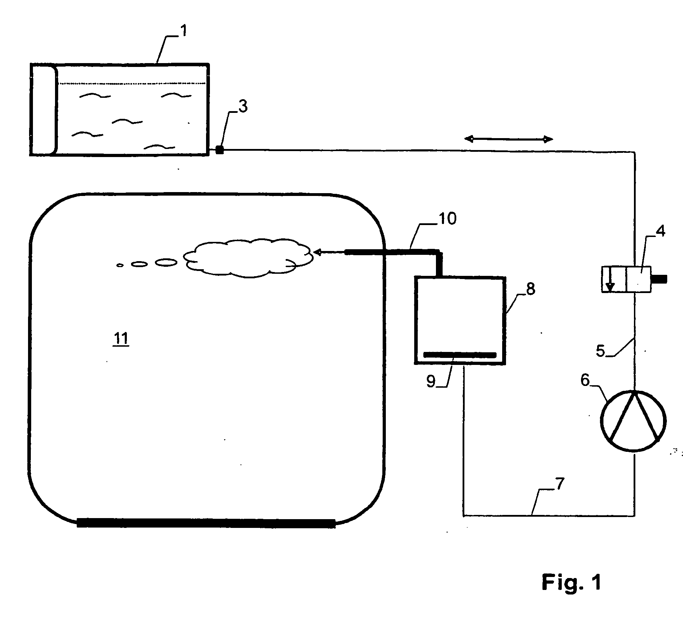

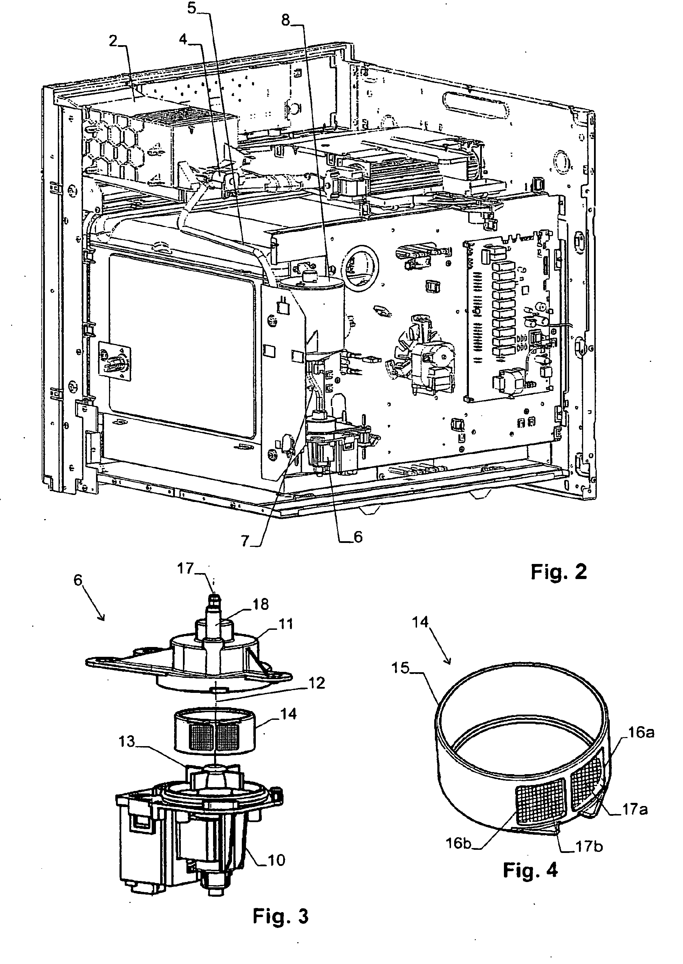

Das in Fig. 1 gezeigte Blockdiagramm stellt ein Dampfgargerät dar, während Fig. 2 eine konkrete Ausführung eines solchen Geräts zeigt. Das Gerät besitzt ein schubladenartiges Wasserreservoir 1, wobei in Fig. 2 nur das Schubladen-Aufnahmegehäuse 2 des Wasserreservoirs 1 sichtbar ist. An der Rückwand des Wasserreservoirs 1 ist ein Steckanschluss 3 mit integriertem Ventil vorgesehen, wobei das integrierte Ventil sich öffnet, wenn das Wasserreservoir 1 voll in das Schubladen-Aufnahmegehäuse 2 eingeschoben ist.

Über ein Rohr fliesst das Wasser vom Steckanschluss 3 zu einem Magnetventil 4, mit welchem der Wasserfluss in beide Richtungen unterbrochen werden kann. Vom Magnetventil 4 gelangt das Wasser über ein weiteres Rohr 5 zu einer Förderpumpe 6. Von dieser führt ein Rohr 7 in den Verdampfer 8. Im Verdampfer 8 ist eine Heizung 9 angeordnet, mit der das Wasser verdampft werden kann. Der Dampf gelangt über ein Rohr 10 in den Garraum 11.

Die Funktionsweise des Geräts ist wie folgt.

Um Wasser vom Wasserreservoir 1 in den Verdampfer 8 zu fördern, wird das Magnetventil 4 geöffnet. Die Förderpumpe ist eine Flügelradpumpe, welche im Ruhezustand für Wasser in beide Richtungen durchlässig ist. Da der Verdampfer 8 tiefer als das Wasserreservoir 1 angeordnet ist, fliesst das Wasser also vom Wasserreservoir 1 in den Verdampfer 8. Sobald eine ausreichende Menge von Wasser im Verdampfer ist, wird das Magnetventil 4 geschlossen.

Wird das Wasser im Verdampfer 8 nicht mehr benötigt, so wird das Magnetventil 4 wiederum geöffnet. Ungefähr gleichzeitig wird die Förderpumpe 6 in Betrieb gesetzt und fördert Wasser in Richtung des Wasserreservoirs 1, so dass sich der Verdampfer 8 entleert.

Insbesondere beim Entleeren des Verdampfers 8 werden in diesem erzeugte Kalkpartikel in Richtung des Wasserreservoirs 1 gefördert, was ohne zusätzliche Massnahmen relativ schnell zu einer starken Verschmutzung des Magnetventils 4 und des Steckanschlusses 3 führt und deren Betrieb beeinträchtigt. Deshalb ist in der Förderpumpe 6 ein Filter angeordnet, welches im Folgenden genauer beschrieben wird.

Der Aufbau der Förderpumpe 6 ergibt sich aus Fig. 3. Die Pumpe besitzt ein zweiteiliges Gehäuse 10, 11, wobei die beiden Gehäuseteile über einen Schnappverschluss miteinander verbunden werden können. Im Gehäuseteil 10 ist der Motor der Pumpe angeordnet, welcher als Fördermittel ein sich um eine Drehachse 12 drehendes Flügelrad 13 antreibt. Das Flügelrad 13 ist in einer Förderkammer angeordnet, welche zwischen dem unteren Gehäuseteil 10, dem deckelartigen oberen Gehäuseteil 11 und einem Filtereinsatz 14 gebildet wird.

Der Filtereinsatz 14 ist im Detail in Fig. 4 gezeigt. Er ist zylindrisch geformt und um das Flügelrad 13 herum konzentrisch zur Drehachse 12 angeordnet. Er weist einen Kunststoffkörper 15 auf, in welchem zwei Öffnungen 16a, 16b angeordnet sind, welche die Austrittsöffnungen der Förderkammer bilden. In den Öffnungen 16a, 16b sind Filter 17a, 17b aufgespannt. Die Filter 17a, 17b folgen, wie der übrige Kunststoffkörper 15, einer Zylinderform und bilden je ein Zylindersegment mit Zentrum in der Drehachse 12. Diese Ausgestaltung hat den Vorteil, dass die Filter relativ nahe an den Pfad herangebracht werden können, dem die äusseren Flügelränder des Flügelrads bei ihrer Bewegung folgen.

Im oberen Gehäuseteil 11 ist in der Verlängerung der Drehachse 12 ein Einlass 17 angeordnet, durch welchen das geförderte Wasser vom Verdampfer 8 her einströmt. Es wird vom sich drehenden Flügelrad 13 radial nach aussen und zu einer Wirbelbewegung um die Drehachse 12 beschleunigt und tritt durch die Austrittsöffnungen 16a, 16b aus der Förderkammer aus. Es wird in einer Vorkammer hinter den Austrittsöffnungen 16a, 16b gesammelt und verlässt die Pumpe durch einen Austritt 18 in Richtung des Wasserreservoirs 1.

Kalkpartikel, die vom Verdampfer 8 her kommen, werden von den Filtern 17a, 17b zurückgehalten, es sei denn, sie seien so klein, dass sie durch die Maschenöffnungen des Filters treten können. Die Maschenöffnungen sind so bemessen, dass durchtretende Kalkpartikel so klein sind, dass sie den Betrieb des Magnetventils 4 und des Steckanschlusses 3 nicht beeinträchtigen.

Vorzugsweise beträgt die Maschenweite des Filters rund 0.4 mm bei einer Drahtdicke von 0.16 mm. Es wurden jedoch auch Filter mit Maschenweiten von 0.3 bis 0.5 mm erfolgreich eingesetzt. Ist die Maschenweite zu klein, so kann das Filter verstopfen, ist sie zu gross, so können die Kalkpartikel den Betrieb der Ventile beeinträchtigen.

Da die Filter 17a, 17b nahe am Flügelrad 13 angeordnet sind, werden die Kalkpartikel, die sich an diesen aufstauen, bei Betrieb der Förderpumpe aufgewirbelt und zerkleinert. Sobald sie so klein sind, dass sie durch die Maschen der Filter passen, verlassen sie die Förderkammer. Somit sammeln sich vor dem Filter längerfristig keine grossen Mengen von Kalk an, so dass in der Regel keine spezielle Wartung dieses Teils erforderlich ist.

Da die Filter 17a, 17b radial ausserhalb des sich drehenden Flügelrads 13 angeordnet sind, hat das Wasser bei den Filtern eine Geschwindigkeitskomponente parallel zur Filterebene, was ein Aufwirbeln der an den Filtern aufgestauten Partikel begünstigt. Vorzugsweise beträgt der radiale Abstand zwischen dem Pfad der Aussenkanten des Flügelrads 13 und den Filtern höchstens 2 mm, insbesondere ca. 1 mm. Durch diesen kleinen Abstand wird das Aufwirbeln ebenfalls begünstigt.

Die dargestellte Pumpe ist eine Synchronpumpe. Sie hat eine relativ hohe Drehzahl von 3000 min⁻¹. Durch die entsprechend hohen Strömungsgeschwindigkeiten wird das Aufwirbeln weiter begünstigt.

Die Filter 17a, 17b sind im Kunststoffteil 15 eingegossen, so dass keine makroskopischen Fugen entstehen, in denen sich Kalkpartikel festsetzen könnten.

Ebenfalls um Ablagerungen von Kalkpartikeln zu erschweren, sind die Filter 17a, 17b im wesentlichen bündig zur Innenwand der Förderkammer, d.h. zur Innenwand des Kunststoffteils 15, angeordnet, so dass keine Stufen entstehen.

Um allfällig vorhandene Ablagerungen von Kalkpartikeln an den Filtern 17a, 17b besser zu lösen, ist das Haushaltgerät so ausgestaltet, dass zu Beginn oder während eines Pumpvorgangs die Durchlaufrichtung des Wassers kurzzeitig umgekehrt wird. Hierzu kann z.B. die Förderpumpe 6 bei geöffnetem Magnetventil 4 kurz ausgeschaltet bleiben, so dass Wasser aufgrund der Schwerkraft zum Verdampfer 8 hin fliesst. Beim Einschalten der Förderpumpe 6 wird die Durchlaufrichtung des Wassers umgekehrt.

Das erfindungsgemässe Filter kann auch bei anderen Pumpentypen, wie z.B. Schneckenpumpen oder Zahnradpumpen eingesetzt werden. Es kann auch in Systemen verwendet werden, bei denen für die Zu- und Abfuhr von Wasser zum bzw. vom Verdampfer 8 separate Rohrleitungen vorgesehen sind.

## Patentansprüche

1. Haushaltgerät, insbesondere Dampfgargerät, mit einem Verdampfer (8), einem Wasserreservoir (1) und einer zwischen Verdampfer (8) und Wasserreservoir (1) angeordneten Förderpumpe (6), wobei die Förderpumpe (6) eine Förderkammer mit einem in der Förderkammer angeordneten, von einem Antrieb bewegten Fördermittel (13) zum Fördern von Wasser aufweist, und wobei die Förderkammer mindestens eine Austrittsöffnung (16a, 16b) aufweist, **dadurch gekennzeichnet, dass** an der Austrittsöffnung (16a, 16b) mindestens ein Filter (17a, 17b) zum Zurückhalten von Kalkpartikeln angeordnet ist.

2. Haushaltgerät nach Anspruch 1, wobei das Fördermittel (13) um eine Drehachse (12) zur Drehung angetrieben ist und wobei das Filter (17a, 17b) bezüglich der Drehachse (12) radial ausserhalb des Fördermittels (13) angeordnet ist.

3. Haushaltgerät nach Anspruch 2, wobei das Filter (17a, 17b) die Form eines Zylindersegments mit Zentrum in der Drehachse (12) aufweist.

4. Haushaltgerät nach einem der Ansprüche 2 oder 3 wobei ein radialer Abstand zwischen dem Filter (17a, 17b) und dem Fördermittel (13) höchstens 2 mm beträgt.

5. Haushaltgerät nach einem der Ansprüche 2 bis 4, wobei das Filter (17a, 17b) in einem ringförmigen Filtereinsatz (14) angeordnet ist, der um das Fördermittel (13) herum koaxial zur Drehachse (12) angeordnet ist.

6. Haushaltgerät nach Anspruch 5, wobei der Filtereinsatz (14) einen Kunststoffkörper (15) aufweist, in welchem die mindestens eine Austrittsöffnung (16a, 16b) angeordnet ist, wobei das Filter (17a, 17b) die Austrittsöffnung (16a, 16b) überspannt.

7. Haushaltgerät nach einem der vorangehenden Ansprüche, wobei das Fördermittel (13) das Flügelrad einer Flügelradpumpe ist.

8. Haushaltgerät nach einem der vorangehenden Ansprüche, wobei zwischen der Förderpumpe (6) und dem Wasserreservoir (1) mindestens ein Ventil (3, 4) angeordnet ist.

9. Haushaltgerät nach einem der vorangehenden Ansprüche, wobei es ausgestaltet ist, um Wasser vom Wasserreservoir (1) zum Verdampfer (8) und vom Verdampfer (8) zum Wasserreservoir (1) zu fördern.

10. Haushaltgerät nach einem der vorangehenden Ansprüche, wobei das Filter (17a, 17b) eine Maschenweite zwischen 0.3 und 0.5 mm aufweist.

11. Haushaltgerät nach einem der vorangehenden Ansprüche, wobei das Filter (17a, 17b) bündig zu einer Innenwand der Förderkammer angeordnet ist.

12. Haushaltgerät nach einem der vorangehenden Ansprüche, wobei das Haushaltgerät ausgestaltet ist, um eine Durchflussrichtung des Wassers vor oder während einem Pumpvorgang kurzzeitig umzukehren um Ablagerungen von Kalkpartikeln beim Filter (17a, 17b) zu lösen.

## Claims

1. Household device, in particular steam cooking device, with an evaporator (8), a water reservoir (1) and a feeding pump (6) arranged between the evaporator (8) and the water reservoir (1), wherein the feeding pump (6) comprises a feeding chamber with a feeding means (13) arranged in the feeding chamber and driven by a drive for feeding water, and wherein the feeding chamber comprises at least one exit opening (16a, 16b), **characterized in that** at least one filter (17a, 17b) is arranged at the exit opening (16a, 16b) for holding back lime particles.

2. Household device of claim 1, wherein the feeding means (13) is driven for rotation about a rotational axis (12) and wherein the filter (17a, 17b) is arranged, in view of the rotational axis (12), radially outside the feeding means (13).

3. Household device of claim 2, wherein the filter (17a, 17b) has the shape of a cylinder segment with its centre in the rotational axis (12).

4. Household device of any of the claims 2 or 3, wherein a radial distance between the filter (17a, 17b) and the feeding means (13) is at most 2 millimetres.

5. Household device of any of the claims 2 to 4, wherein the filter (17a, 17b) is arranged in an annular filter insert (14), which is arranged coaxially in respect to the rotational axis (12) around the feeding means (13).

6. Household device of claim 5, wherein the filter insert(14) has a plastic body (15), in which the at least one exit opening (16a, 16b) is arranged, wherein the filter (17a, 17b) spans the exit opening (16a, 16b).

7. Household device of any of the preceding claims, wherein the feeding means (13) is the impeller of an impeller pump.

8. Household device of any of the preceding claims, wherein at least one valve (3, 4) is arranged between the feeding pump (6) and the water reservoir (1).

9. Household device of any of the preceding claims, wherein it is designed to feed water from the water reservoir (1) to the evaporator (8) and from the evaporator (8) to the water reservoir (1).

10. Household device of any of the preceding claims, wherein the filter (17a, 17b) has a mesh width between 0.3 and 0.5 millimetres.

11. Household device of any of the preceding claims, wherein the filter (17a, 17b) is flush to an inner wall of the feeding chamber.

12. Household device of any of the preceding claims, wherein the household device is designed to temporarily revert a flow direction of the water before or during a pump process in order to loosen deposits of lime particles at the filter (17a, 17b).

## Revendications

1. Appareil ménager, en particulier appareil de cuisson à vapeur, comprenant un évaporateur (8), un réservoir d'eau (1) et une pompe d'alimentation (6) disposée entre l'évaporateur (8) et le réservoir d'eau (1), la pompe d'alimentation (6) comprenant une chambre d'alimentation dotée de moyens d'alimentation (13) destinés à l'alimentation en eau, disposés dans la chambre d'alimentation et déplacés par un entraînement, et la chambre d'alimentation comprenant au moins une ouverture de sortie (16a, 16b), **caractérisé en ce qu'**au moins un filtre (17a, 17b) destiné à retenir les particules de calcaire est disposé sur l'ouverture de sortie (16a, 16b).

2. Appareil ménager selon la revendication 1, les moyens d'alimentation (13) étant entraînés en rotation autour d'un axe de rotation (12) et le filtre (17a, 17b) étant disposé radialement à l'extérieur des moyens d'alimentation (13) par rapport à l'axe de rotation (12).

3. Appareil ménager selon la revendication 2, le filtre (17a, 17b) présentant la forme d'un segment cylindrique avec un centre dans l'axe de rotation (12).

4. Appareil ménager selon l'une quelconque des revendications 2 ou 3, un écart radial entre le filtre (17a, 17b) et les moyens d'alimentation (13) mesurant au maximum 2 mm.

5. Appareil ménager selon l'une quelconque des revendications 2 à 4, le filtre (17a, 17b) étant disposé dans un insert de filtre annulaire (14) qui est disposé autour des moyens d'alimentation (13) de manière coaxiale à l'axe de rotation (12).

6. Appareil ménager selon la revendication 5, l'insert de filtre (14) comprenant un corps en matière plastique (15) dans lequel est disposée la au moins une ouverture de sortie (16a, 16b), le filtre (17a, 17b) recouvrant l'ouverture de sortie (16a, 16b).

7. Appareil ménager selon l'une quelconque des revendications précédentes, les moyens d'alimentation (13) étant la roue-palette d'une pompe à roues-palettes.

8. Appareil ménager selon l'une quelconque des revendications précédentes, au moins une soupape (3, 4) étant disposée entre la pompe d'alimentation (6) et le réservoir d'eau (1).

9. Appareil ménager selon l'une quelconque des revendications précédentes qui est conçu pour amener l'eau du réservoir d'eau (1) à l'évaporateur (8) et de l'évaporateur (8) au réservoir d'eau (1).

10. Appareil ménager selon l'une quelconque des revendications précédentes, le filtre (17a, 17b) comprenant une ouverture de crible comprise entre 0,3 et 0,5 mm.

11. Appareil ménager selon l'une quelconque des revendications précédentes, le filtre (17a, 17b) étant disposé de manière adjacente à une paroi intérieure de la chambre d'alimentation.

12. Appareil ménager selon l'une quelconque des revendications précédentes, l'appareil ménager étant configuré pour inverser un sens d'écoulement de l'eau avant ou pendant un processus de pompage momentané afin de déloger les dépôts de particules de calcaire dans le filtre (17a, 17b).
